# EUROPÄISCHE PATENTSCHRIFT

(11) **EP 1 466 793 B1**
(45) Veröffentlichungstag und Bekanntmachung des Hinweises auf die Patenterteilung: **26.07.2006**
(21) Anmeldenummer: 03008264.8
(22) Anmeldetag: 09.04.2003
(51) Int. Cl.: B60R 21/20

(54) **Gassackmodul**
Airbag module
Module d'airbag

(43) Veröffentlichungstag der Anmeldung: 13.10.2004
(73) Patentinhaber: Delphi Technologies, Inc., Troy, MI 48007 (US)
(72) Erfinder: Asic, Sabine, 42369 Wuppertal (DE); Hannemann, Jens, 42369 Wuppertal (DE); Burczyk, Christian, 42113 Wuppertal (DE)
(74) Vertreter: Manitz, Finsterwald & Partner GbR

(56) Entgegenhaltungen:
- DE-A- 19 724 896
- DE-C- 4 430 588
- DE-U- 20 117 140

## Beschreibung

Die Erfindung betrifft ein Gassackmodul mit einem Gassack, einem Gasgenerator zum Aufblasen des Gassacks und einer Grundplatte, mit der der Gassack und der Gasgenerator verbunden sind.

Derartige Gassackmodule dienen zum Schutz der Passagiere von Kraftfahrzeugen. Im Falle eines Unfalls können vorbestimmte Verzögerungswerte, wie sie typischerweise bei Unfällen auftreten, mittels geeigneter Sensoren detektiert werden. In Reaktion hierauf wird der Gasgenerator gezündet, um den hiermit verbundenen Gassack kurzzeitig aufzublasen. Der aufgeblasene Gassack dient als Aufprallfläche für den betreffenden Passagier und schützt den Passagier somit vor Verletzungen.

Bei derartigen Gassackmodulen sind der Gassack und der hiermit verbundene Gasgenerator üblicherweise an einer Grundplatte befestigt. Im Falle eines Lenkrad-Gassackmoduls wird das gesamte Modul mittels der Grundplatte an dem Lenkrad lösbar montiert. Hierfür ist es beispielsweise bekannt, die Grundplatte mittels zweier Schrauben an dem Lenkrad festzuschrauben. Alternativ hierzu ist es bekannt, mehrere starre Halteelemente an der Grundplatte vorzusehen, die in geeignete Ausnehmungen an dem Lenkrad eingreifen und dort von Fixierfedern hintergriffen werden.

Während diese Befestigungsweisen eine zuverlässige lösbare Montage eines Gassackmoduls an einem Lenkrad ermöglichen, sind der Teileaufwand und der Montageaufwand dennoch unerwünscht hoch.

Aus der DE-U-201 17 140 ist ein gattungsgemäßes Gassackmodul mit einem Gasgeneratorträger bekannt, an dessen Rückseite ein geschlitzter Zapfen befestigt ist, der Teil einer Rastvorrichtung zur Befestigung des Gassackmoduls an einem Lenkrad ist.

Die DE-C-44 30 588 offenbart ein Gassack-System, das an mindestens einem plastisch verformbaren Element oder Federelement befestigt ist.

In der DE-A-197 24 896 ist ein Gassack-Modul für ein Fahrzeuginsassen-Rückhaltesystem beschrieben.

Aus der DE-U-299 20 025 ist eine Befestigungsvorrichtung zur Befestigung eines Gassackmoduls an einem Lenkrad bekannt, bei der zwei Befestigungsarme mit einem Befestigungsteil eine Schnappverbindung eingehen.

Eine Aufgabe der Erfindung besteht deshalb darin, ein Gassackmodul zu schaffen, das bei einfacher Festigung auf einfache und dennoch zuverlässige Weise an einem Lenkrad eines Fahrzeugs montiert werden kann.

Diese Aufgabe wird durch ein Gassackmodul mit den Merkmalen des Anspruchs 1 gelöst.

Bei dem erfindungsgemäßen Gassackmodul besitzt die Grundplatte also einen oder mehrere, insbesondere zwei Befestigungsarme, die mit dem Lenkrad oder einer dort ausgebildeten Befestigungseinrichtung zusammenzuwirken vermögen. Wesentlich für das erfindungsgemäße Gassackmodul ist, dass der oder die Befestigungsarme rückfedernd, also elastisch verformbar ausgebildet sind, um mit dem Lenkrad eine Clipverbindung eingehen zu können.

Dadurch kann das Gassackmodul mittels der Grundplatte auf einfache Weise und ohne zusätzliche Befestigungselemente an dem Lenkrad montiert werden, nämlich durch kurzzeitige Druckbetätigung, so dass der oder die Befestigungsarme an dem Lenkrad verrasten. Hierfür ist keine besondere Ausgestaltung des Lenkrads erforderlich. Insbesondere sind an dem Lenkrad keine Fixierfedern erforderlich, die bei bekannten Gassackmodulen vorgesehen sind. Stattdessen muss das Lenkrad lediglich eine Anschlagfläche aufweisen, die von dem jeweiligen Befestigungsarm hintergriffen werden kann.

Die Erfindung basiert auf der überraschenden Erkenntnis, dass auch rückfedernd ausgebildete Befestigungsarme Zugkräfte von bis zu 2500 N, wie sie beim Aufblasen eines Gassacks typischerweise auftreten können, problemlos bewältigen können. Das erfindungsgemäße Gassackmodul bietet deshalb - neben der einfachen Befestigung - die erwünschte Betriebszuverlässigkeit.

Es ist bevorzugt, wenn der oder die Befestigungsarme aus Kunststoff gefertigt sind. Dadurch kann die erforderliche rückfedernde Ausgestaltung auf besonders einfache Weise realisiert werden, und die erläuterte Zugfestigkeit ist dennoch gewährleistet. Eine vorteilhaft einfache Fertigung des Gassackmoduls ist dadurch gegeben, dass der oder die Befestigungsarme einstückig mit der Grundplatte ausgebildet sind. Insbesondere können die Grundplatte und der oder die Befestigungsarme einteilig aus Kunststoff gefertigt sein.

Gemäß einer vorteilhaften Weiterbildung besitzen der oder die Befestigungsarme an dem freien Ende eine Sicherungseinrichtung, die den jeweiligen Befestigungsarm gegen eine unbeabsichtigte Seitwärtsbewegung sichert, sobald das Gassackmodul bzw. die Grundplatte an dem Lenkrad montiert ist. Durch eine derartige Sicherheitseinrichtung wird also ein unbeabsichtigtes Lösen der Grundplatte von dem Lenkrad auf besonders zuverlässige Weise verhindert. Diese Sicherungseinrichtung des Befestigungsarms kann beispielsweise einen Hintergreifungsvorsprung, eine Hintergreifungsfläche oder eine Sicherungsausnehmung aufweisen, der oder die mit einer komplementär ausgebildeten Sicherungseinrichtung an dem Lenkrad zusammenwirkt.

Erfindungsgemäß besitzen der oder die Befestigungsarme jeweils einen oder mehrere angeformte Stabilisierungsflügel bzw. -rippen. Derartige Stabilisierungsflügel stabilisieren und verstärken den betreffenden Befestigungsarm zusätzlich, um den hohen Zugkräften standhalten zu können. Eine Beschädigung des Befestigungsarms wird hierdurch besonders zuverlässig verhindert. Vorzugsweise sind an jedem Befestigungsarm genau zwei Stabilisierungsflügel in Gegenüberstellung senkrecht zu der Richtung des Rückfederns des Befestigungsarms vorgesehen. Dadurch wird der Befestigungsarm zusätzlich stabilisiert, während die erforderliche Beweglichkeit für das elastische Rückfedern nicht eingeschränkt ist.

Weiterhin ist es bevorzugt, wenn sämtliche Befestigungsarme rückfedernd ausgebildet sind. Alternativ hierzu können jedoch auch mehrere Befestigungsarme vorgesehen sein, wobei wenigstens ein Befestigungsarm im Wesentlichen starr ausgebildet ist und somit als Fixieranker dient, und wobei wenigstens ein weiterer Befestigungsarm rückfedernd ausgebildet ist, um die erläuterte Clipverbindung mit dem Lenkrad eingehen zu können.

Alternativ oder zusätzlich zu den erläuterten Ausführungsformen kann die Grundplatte ein oder mehrere Führungselemente aufweisen, um die Relativlage der Grundplatte bezüglich des Lenkrads festzulegen. Vorzugsweise wirken das oder die Führungselemente der Grundplatte mit einem jeweiligen Führungselement des Lenkrads zusammen.

Alternativ oder zusätzlich hierzu können auch eine oder mehrere Druckfedern an der Grundplatte vorgesehen sein, um das Lenkrad und die hieran montierte Grundplatte auseinander zu drücken und dadurch für eine Beabstandung zwischen Grundplatte und Lenkrad zu sorgen.

Weitere Ausführungsformen der Erfindung sind in den Unteransprüchen genannt, wobei die in den Unteransprüchen genannten Ausführungsformen auch beliebig miteinander kombiniert werden können.

Die Erfindung wird nachfolgend beispielhaft anhand der Figuren erläutert.
- Fig. 1: zeigt ein montiertes Gassackmodul in einer Seitenansicht.
- Fig. 2: zeigt das Gassackmodul in einer schematischen Mittenquerschnittsansicht.
- Fig. 3: zeigt einen Befestigungsarm in einer Perspektivansicht.
- Fig. 4 und 5: zeigen das Zusammenwirken eines Befestigungsarms mit einer Befestigungseinrichtung eines Lenkrads in einer Querschnittsansicht gemäß alternativen Ausführungsformen.

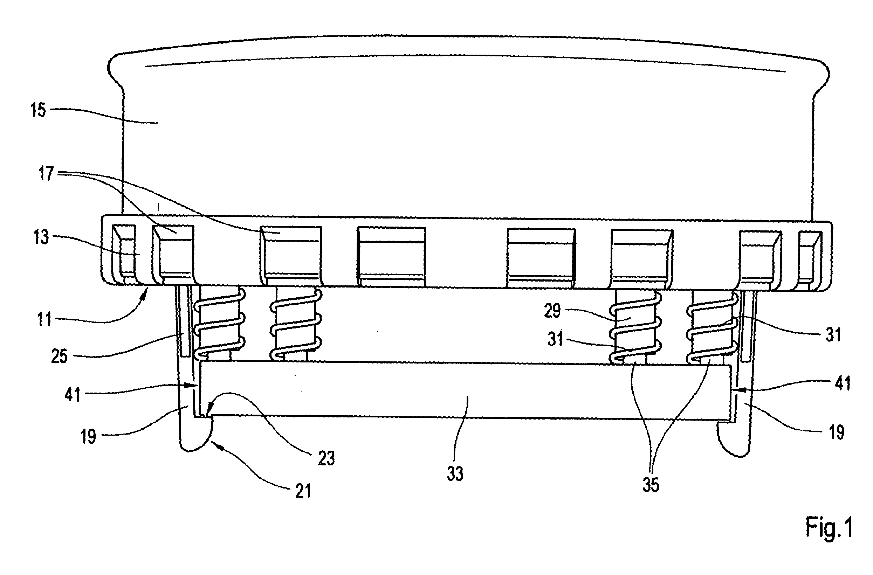

Das Gassackmodul gemäß Fig. 1 besitzt eine im Wesentlichen ringscheibenförmige Grundplatte 11 aus Kunststoff mit einem daran angeformten, nach oben weg ragenden Verbindungsring 13. An dem Verbindungsring 13 ist eine im Wesentlichen hohlzylindrische Abdeckhaube 15 befestigt. Für diese Befestigung sind an dem Verbindungsring 13 mehrere radial nach innen ragende Rastzungen 17 angeformt, die in entsprechende Ausnehmungen an der Abdeckhaube 15 eingreifen. Die Grundplatte 11 und die Abdeckhaube 15 umschließen einen Gassack und einen Gasgenerator, wie nachfolgend noch erläutert wird.

An der Unterseite der Grundplatte 11 sind zwei rückfedernd ausgebildete Befestigungsarme 19 angeformt. Die beiden Befestigungsarme 19 ragen nach unten weg und stehen sich diametral gegenüber. Jeder Befestigungsarm 19 besitzt an seinem freien, radial nach innen ragenden Ende eine der Grundplatte 11 abgewandte Ablenkschräge 21 und einen der Grundplatte 11 zugewandten Rastabschnitt 23. Der Rastabschnitt 23 ist durch eine ebene Fläche gebildet, die senkrecht zu der Erstreckungsrichtung des jeweiligen Befestigungsarms 19 verläuft.

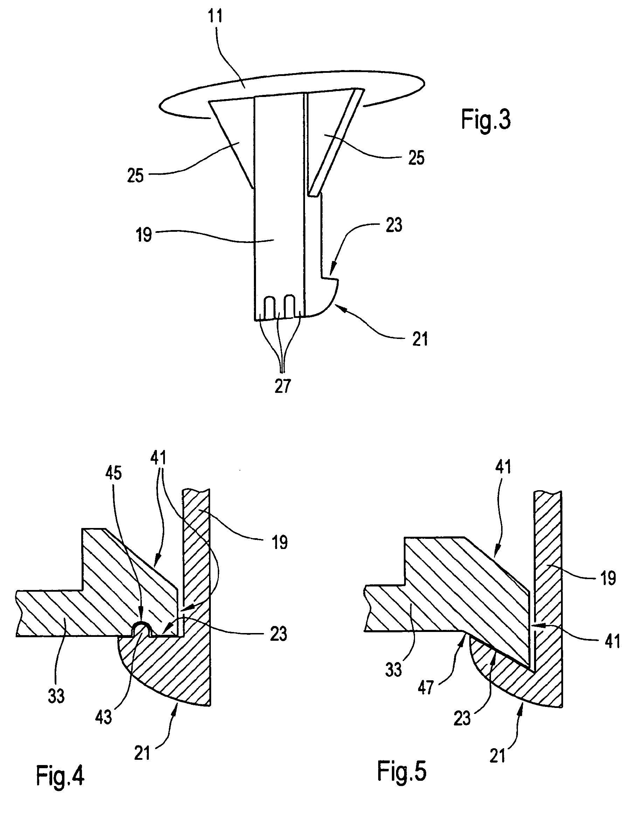

Wie insbesondere aus Fig. 3 ersichtlich ist, besitzt jeder Befestigungsarm 19 ferner zwei dreieckige Stabilisierungsflügel 25, die an den einander gegenüberstehenden Seitenflächen des Befestigungsarms 19 sowie an der Unterseite der Grundplatte 11 angeformt sind. Außerdem ist aus Fig. 3 ersichtlich, dass an dem freien Ende jedes Befestigungsarms 19 zwei Ausnehmungen vorgesehen sind, so dass die genannte Ablenkschräge 21 durch drei Ablenkschienen 27 gebildet ist.

Die Seitenansicht gemäß Fig. 1 zeigt ferner, dass an der Unterseite der Grundplatte 11 auch vier Führungshülsen 29 vorgesehen sind, die im Wesentlichen parallel zu den Befestigungsarmen 19 nach unten weg ragen. Jede Führungshülse 29 ist von einer Druckfeder 31 umgeben, die über das freie Ende der betreffenden Führungshülse 29 hinausragt.

Außerdem ist in Fig. 1 schematisch eine Befestigungsplatte 33 eines Lenkrads gezeigt. Die Befestigungsplatte 33 wird an ihrer Unterseite von den Rastabschnitten 23 der Befestigungsarme 19 gegriffen. An der Oberseite der Befestigungsplatte 33 sind vier Positionierungszapfen 35 ausgebildet, die in eine jeweils zugeordnete Führungshülse 29 der Grundplatte 11 hineinragen. Die freien Enden der Druckfedern 31 liegen an der Oberseite der Befestigungsplatte 33 an.

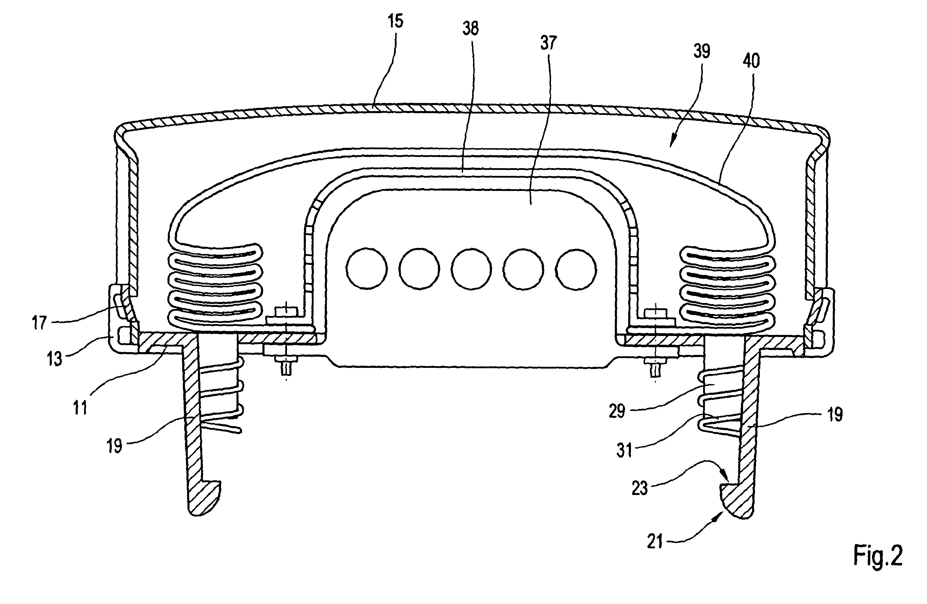

Fig. 2 zeigt das Gassackmodul gemäß Fig. 1 in einer schematischen Teilquerschnittsansicht, ohne Befestigungsplatte 33. In Fig. 2 ist ein Gasgenerator 37 zu erkennen, der von einem Diffusor 38 umgeben ist. Der Gasgenerator 37 und der Diffusor 38 sind an der Grundplatte 11 dauerhaft befestigt. In Fig. 2 ist ferner zwischen dem Diffusor 38 und der Abdeckhaube 15 ein Hohlraum 39 zu erkennen. In diesem Hohlraum 39 befindet sich ein zusammengefalteter Gassack 40, der ebenfalls an der Grundplatte 11 befestigt ist und den Gasgenerator 37 umhüllt.

Das in den Fig. 1 bis 3 gezeigte Gassackmodul dient zur Erhöhung der Sicherheit des Fahrers eines Fahrzeuges. Im Falle eines Unfalls wird aufgrund eines Auslösesignals eines Verzögerungssensors der Gasgenerator 37 gezündet. Dadurch wird in sehr kurzer Zeit der Gassack 40 aufgeblasen. Die Abdeckhaube 15 wird hierbei entlang einer oder mehrerer Sollbruchstellen geöffnet. Der Gassack 40 kann sich somit außerhalb des gezeigten Moduls entfalten. Durch den aufgeblasenen Gassack 40 wird eine Vorwärtsbewegung des Fahrers abgefangen.

Die Montage des gezeigten Gassackmoduls geschieht auf folgende Weise, wobei es von wesentlicher Bedeutung ist, dass die beiden Befestigungsarme 19 rückfedernd ausgebildet sind:

Zunächst wird das Gassackmodul vormontiert, indem die Grundplatte 11, der Gasgenerator 37, der Diffusor 38, der Gassack 40 und die Abdeckhaube 15 aneinander befestigt werden, wie in Fig. 2 gezeigt.

Danach wird das vormontierte Gassackmodul an einem Lenkrad eines Fahrzeugs befestigt. Hierfür wird das Modul in axialer Richtung, also mit den Befestigungsarmen 19 voraus auf das Lenkrad aufgesetzt und weiter in axialer Richtung gedrückt. Dabei greifen die Befestigungsarme 19 zunächst in geeignete Ausnehmungen an dem Lenkrad ein und werden durch Kontakt der Ablenkschrägen 21 mit entsprechenden Ablenkflächen 41 des Lenkrads kurzeitig elastisch verformt, so dass die freien Enden der Befestigungsarme 19 gemäß der Ansicht nach Fig. 2 kurzzeitig voneinander weg bewegt werden. Während dieser Aufsetzbewegung greifen auch die Positionierungszapfen 35 des Lenkrads in die Führungshülsen 29 der Grundplatte 11 ein und bewirken somit eine andauernde Justierung der Grundplatte 11 relativ zu dem Lenkrad. Ferner treten die Druckfedern 31 in Kontakt mit dem Lenkrad und üben deshalb mit andauernder axialer Aufsetzbewegung eine zunehmende Kraft aus, die der Aufsetzbewegung entgegenwirkt.

Nachdem schließlich die freien Enden der Befestigungsarme 19 die jeweilige Ablenkfläche 41 des Lenkrads passiert haben, können die Befestigungsarme 19 wieder in ihre normale Ausrichtung zurückfedern. Dieser Zustand ist in Fig. 1 gezeigt. Die Befestigungsarme 19 umgreifen nun die Befestigungsplatte 33, wobei die Rastabschnitte 23 der Befestigungsarme 19 an der Unterseite der Befestigungsplatte 33 des Lenkrads anliegen. Das Gassackmodul ist somit an dem Lenkrad gegen eine axiale Entnahme gesichert.

Ein Vorteil der erläuterten Montageart besteht darin, dass die Befestigung der Grundplatte 11 an der Befestigungsplatte 33 allein aufgrund der angeformten, rückfedernd ausgebildeten Befestigungsarme erfolgt, ohne dass zusätzliche Befestigungselemente oder Montageabläufe erforderlich sind. Insbesondere ist kein aufwendiges Verschrauben der Grundplatte 11 an der Befestigungsplatte 33 erforderlich, und auch zusätzliche Befestigungsfedern oder sonstige Sperreinrichtungen seitens des Lenkrads entfallen.

In dem in Fig. 1 gezeigten endmontierten Zustand üben die Druckfedern 31 eine Federkraft zwischen der Grundplatte 11 des Gassackmoduls und der Befestigungsplatte 33 des Lenkrads aus. Somit wird die gezeigte axiale Relativlage von Grundplatte 11 und Befestigungsplatte 33 generell beibehalten. Allerdings ist auch zu erkennen, dass die Führungshülsen 29 der Grundplatte 11 nicht an der Befestigungsplatte 33 anliegen. Es ist daher möglich, das Gassackmodul entgegen der Kraft der Druckfedern 31 geringfügig noch weiter axial in Richtung der Befestigungsplatte zu bewegen. Dadurch kann zum Beispiel - auf an sich bekannte Weise - das Betätigen einer Fahrzeughupe verwirklicht werden.

Durch das Zusammenwirken der Führungshülsen 29 mit den Positionierungszapfen 35 ist sowohl während der Endmontage als auch im endmontierten Zustand die Relativlage der Grundplatte 11 bezüglich der Befestigungsplatte 33 festgelegt. Die seitlichen Stabilisierungsflügel 25 an den Befestigungsarmen 19 bewirken eine zusätzliche Stabilisierung der Befestigungsarme 19, ohne deren Rückfedervermögen einzuschränken.

Fig. 4 zeigt eine alternative Ausführungsform für das Zusammenwirken der Befestigungsarme 19 mit der Befestigungsplatte 33 des Lenkrads. Bei dieser Ausführungsform ist an dem Rastabschnitt 23 des Befestigungsarms 19 ein Hintergreifungsvorsprung 43 ausgebildet, der in eine an der Befestigungsplatte 33 komplementär ausgebildete Sicherungsausnehmung 45 eingreift. Der Befestigungsarm 19 ist somit in dem in Fig. 4 gezeigten Zustand gegen eine unbeabsichtigte Seitwärtsbewegung gesichert. Ein beabsichtigtes Lösen des Befestigungsarms 19 von der Befestigungsplatte 33 ist demnach nur möglich, wenn die Grundplatte 11 gleichzeitig entgegen der Kraft der Druckfedern 31 in Richtung der Befestigungsplatte 33 gedrückt wird.

Fig. 5 zeigt schließlich eine weitere Ausführungsform für das Zusammenwirken der Befestigungsarme 19 mit der Befestigungsplatte 33 des Lenkrads. Bei dieser Ausführungsform ist der Rastabschnitt 23 des Befestigungsarms 19 als eine Hintergreifungsfläche mit negativer Schräge ausgebildet, d.h. der Rastabschnitt 23 und die Längsrichtung des Befestigungsarms 19 schließen einen Winkel ein, der geringer ist als 90°. Eine Anschlagfläche 47 der Befestigungsplatte 33 ist komplementär hierzu, d.h. ebenfalls schräg ausgebildet. Durch das Zusammenwirken des Rastabschnitts 23 mit der Anschlagfläche 47 ist der Befestigungsarm 19 gegen eine unbeabsichtigte Seitwärtsbewegung gesichert.

### Bezugszeichenliste

- 11: Grundplatte
- 13: Verbindungsring
- 15: Abdeckhaube
- 17: Rastzunge
- 19: Befestigungsarm
- 21: Ablenkschräge
- 23: Rastabschnitt
- 25: Stabilisierungsflügel
- 27: Ablenkschiene
- 29: Führungshülse
- 31: Druckfeder
- 33: Befestigungsplatte
- 35: Positionierungszapfen
- 37: Gasgenerator
- 38: Diffusor
- 39: Hohlraum
- 40: Gassack
- 41: Ablenkfläche
- 43: Hintergreifungsvorsprung
- 45: Sicherungsausnehmung
- 47: Anschlagfläche

## Patentansprüche

1. Gassackmodul mit einem Gassack (40), einem Gasgenerator (37) zum Aufblasen des Gassacks und einer Grundplatte (11), mit der der Gassack und der Gasgenerator verbunden sind,
wobei die Grundplatte (11) wenigstens einen rückfedernd ausgebildeten Befestigungsarm (19) zur Befestigung der Grundplatte an einem Lenkrad (33) eines Fahrzeugs aufweist, der einstückig mit der Grundplatte (11) ausgebildet ist,
**dadurch gekennzeichnet,**
**dass** der wenigstens eine Befestigungsarm (19) wenigstens einen angeformten Stabilisierungsflügel (25) aufweist.

2. Gassackmodul nach Anspruch 1,
**dadurch gekennzeichnet,**
**dass** der wenigstens eine Befestigungsarm (19) zwei in Gegenüberstellung seitlich angeformte Stabilisierungsflügel (25) aufweist, die sich quer zu der Richtung eines Rückfederns des Befestigungsarms (19) erstrecken.

3. Gassackmodul nach Anspruch 1,
**dadurch gekennzeichnet,**
**dass** der wenigstens eine Befestigungsarm (19) an seinem freien Ende eine Ablenkschräge (21) und/oder einen Rastabschnitt (23) auf weist.

4. Gassackmodul nach Anspruch 1,
**dadurch gekennzeichnet,**
**dass** der wenigstens eine Befestigungsarm (19) zum Sichern gegen eine unbeabsichtigte Seitwärtsbewegung an seinem freien Ende eine Sicherungseinrichtung aufweist, insbesondere einen Hintergreifungsvorsprung (43), eine Hintergreifungsfläche (23) oder eine Sicherungsausnehmung.

5. Gassackmodul nach Anspruch 1,
**dadurch gekennzeichnet,**
**dass** die Grundplatte (11) mehrere, insbesondere zwei Befestigungsarme (19) aufweist.

6. Gassackmodul nach Anspruch 1,
**dadurch gekennzeichnet,**
**dass** die Grundplatte (11) mehrere Befestigungsarme (19) aufweist, und dass alle Befestigungsarme (19) rückfedernd ausgebildet sind.

7. Gassackmodul nach Anspruch 1,
**dadurch gekennzeichnet,**
**dass** die Grundplatte (11) wenigstens ein Führungselement (29) zur Festlegung der Relativlage der Grundplatte (11) bezüglich des Lenkrads (33) aufweist.

8. Gassackmodul nach Anspruch 1,
**dadurch gekennzeichnet,**
**dass** an der Grundplatte (11) wenigstens eine Druckfeder (31) zum Ausüben einer Federkraft zwischen der montierten Grundplatte und dem Lenkrad (33) vorgesehen ist.

## Claims

1. Gas bag module comprising a gas bag (40), a gas generator (37) for inflating the gas bag and a base plate (11) to which the gas bag and the gas generator are connected, wherein the base plate (11) has at least one securing arm (19) which is designed to spring back for the securing of the base plate to a steering wheel (33) of a vehicle,
**characterized in that**
the at least one securing arm (19) has at least one stabilizing wing (25) which is formed on it.

2. Gas bag module in accordance with claim 1, **characterized in that** the at least one securing arm (19) has two stabilizing wings (25) which are laterally molded onto it in opposing positions and which extend transversely to the direction of spring back of the securing arm (19).

3. Gas bag module in accordance with claim 1, **characterized in that** the at least one securing arm (19) has a deflection ramp (21) and/or a latching section (23) at its free end.

4. Gas bag module in accordance with claim 1, **characterized in that** the at least one securing arm (19) has a securing device, in particular a hook projection (43), a hook surface (23) or a securing recess at its free end, for securing against an unintentional sideward movement.

5. Gas bag module in accordance with claim 1, **characterized in that** the base plate (11) has a plurality of securing arms, in particular two securing arms (19).

6. Gas bag module in accordance with claim 1, **characterized in that** the base plate (11) has a plurality of securing arms (19); and **in that** all securing arms (19) are formed to spring back.

7. Gas bag module in accordance with claim 1, **characterized in that** the base plate (11) has at least one guide element (29) for fixing the relative position of the base plate (11) with respect to the steering wheel (33).

8. Gas bag module in accordance with claim 1, **characterized in that** at least one compression spring (31) is provided at the base plate (11) for exerting a spring force between the mounted base plate and the steering wheel (33).

## Revendications

1. Module de coussin gonflable comportant un coussin gonflable (40), un générateur de gaz (37) pour gonfler le coussin gonflable et une plaque de base (11) à laquelle sont reliés le coussin gonflable et le générateur de gaz, la plaque de base (11) comportant au moins un bras de fixation (19) réalisé de manière à faire ressort pour la fixation de la plaque de base sur un volant (33) d'un véhicule, lequel bras est réalisé d'une seule pièce avec la plaque de base (11), **caractérisé en ce que** le au moins un bras de fixation (19) comporte au moins une ailette de stabilisation (25) venue de moulage.

2. Module de coussin gonflable selon la revendication 1, **caractérisé en ce que** le au moins un bras de fixation (19) comporte deux ailettes de stabilisation (25) venues de moulage latéralement, en vis-à-vis, qui s'étendent transversalement à la direction d'un mouvement de ressort du bras de fixation (19).

3. Module de coussin gonflable selon la revendication 1 ou 2, **caractérisé en ce que** le au moins un bras de fixation (19) comporte à son extrémité libre un chanfrein de déviation (21) et/ou un segment d'encliquetage (23).

4. Module de coussin gonflable selon la revendication 1, **caractérisé en ce que** le au moins un bras de fixation (19) comporte à son extrémité libre, pour empêcher un mouvement de côté involontaire, un dispositif de sûreté, en particulier une saillie (43) d'accrochage par derrière, une surface (23) d'accrochage par derrière ou un évidement de sûreté.

5. Module de coussin gonflable selon la revendication 1, **caractérisé en ce que** la plaque de base (11) comporte plusieurs, en particulier deux bras de fixation (19).

6. Module de coussin gonflable selon la revendication 1, **caractérisé en ce que** la plaque de base (11) comporte plusieurs bras de fixation (19) et **en ce que** tous les bras de fixation (19) sont réalisés de manière à faire ressort.

7. Module de coussin gonflable selon la revendication 1, **caractérisé en ce que** la plaque de base (11) comporte au moins un élément de guidage (29) pour la fixation de la position relative de la plaque de base (11) par rapport au volant (33).

8. Module de coussin gonflable selon la revendication 1, **caractérisé en ce que** sur la plaque de base (11) est prévu au moins un ressort de pression (31) pour exercer une force de ressort entre la plaque de base montée et le volant (33).
